# FASCICULE DE BREVET EUROPEEN

(11) **EP 4 326 040 B1**
(45) Date de publication et mention de la délivrance du brevet: **01.10.2025**
(21) Numéro de dépôt: 22723665.0
(22) Date de dépôt: 20.04.2022
(51) Int. Cl.: A01B 69/04

(54) **PROCÉDÉ DE RÉGLAGE ET/OU DE CALIBRAGE D'UNE MACHINE AGRICOLE**
VERFAHREN ZUM EINSTELLEN UND/ODER KALIBRIEREN EINER LANDWIRTSCHAFTLICHEN MASCHINE
METHOD FOR ADJUSTING AND/OR CALIBRATION OF AN AGRICULTURAL MACHINE

(30) Priorité: 22.04.2021 FR 2104201
(43) Date de publication de la demande: 28.02.2024
(73) Titulaire: Kuhn SAS, 67700 Saverne (FR)
(72) Inventeur: JARRASSIER, Benoît, 67700 OTTERSTHAL (FR); LABOUREY, Quentin, 67100 STRASBOURG (FR); POTIER, Philippe, 67290 ZITTERSHEIM (FR)
(74) Mandataire: Hager, Esther Evelyne
(86) Numéro de dépôt international: PCT/EP2022/060436
(87) Numéro de publication internationale: WO 2022/223630

(56) Documents cités:
- EP-A1- 3 104 244
- EP-A1- 3 351 419
- EP-A1- 3 571 911
- DE-A1- 102019 000 794
- US-A1- 2017 355 252

## Description

La présente invention concerne le domaine du machinisme agricole et plus particulièrement du travail du sol ou des végétaux d'une parcelle agricole par un engin agricole à fonctionnement autonome, c'est-à-dire pouvant travailler ladite parcelle sans l'assistance d'un opérateur. Un tel engin est couramment dénommé robot agricole et correspond à une machine ou un attelage agricole mobile et motorisée pourvu d'au moins un outil (intégré, porté, semi-porté ou trainé) et comportant des moyens (de pilotage, de communication, de repérage, ...) le rendant apte à travailler une parcelle de manière autonome.

Dans ce contexte, l'invention a pour objet un procédé de réglage et/ou de calibrage d'un tel robot agricole et un procédé de mise en œuvre de ce robot.

Un tel robot agricole peut être mis en œuvre seul pour travailler une parcelle ou faire partie d'une flotte d'au moins deux robots affectés à ladite parcelle. Ce robot peut fonctionner de manière totalement indépendante (carte de préconisation, GPS, ...) ou être contrôlé à distance par un système central de commande à distance d'une flotte de robots par exemple. Les robots d'une flotte peuvent ou non communiquer entre eux et être le cas échéant affecté au travail d'une partie prédéterminée de la parcelle.

Typiquement, la réalisation d'une tâche ou d'une opération agricole sur une parcelle par le biais d'une machine agricole autonome comprend essentiellement trois étapes principales, à l'instar d'un processus de travail agricole conventionnel, c'est à dire non-autonome, effectué en totalité sous le contrôle d'un opérateur.

La première étape, réalisée par un opérateur, consiste à amener le robot agricole et son ou ses outil(s) au niveau de la parcelle à traiter, à réaliser les éventuelles opérations de montage ou d'assemblage pour que le robot soit configuré pour pouvoir exécuter le travail à effectuer et à le positionner en début de parcours.

La deuxième étape consiste à effectuer le réglage et/ou le calibrage du robot et de son/ses outil(s). En effet, les paramètres de fonctionnement de ces derniers doivent être réglés pour être le plus en adéquation possible avec les conditions de travail réelles du jour et des caractéristiques de la parcelle à travailler (humidité, température, vent, type et état du sol, densité et qualité des plantes à traiter, nature et intensité des opérations agricoles à effectuer, ...). Ces paramètres ne peuvent pas être réglés en avance et doivent donc l'être sur site par des essais et des tests en conditions réelles. Généralement, et en fonction de la complexité des réglages et calibrages et du nombre de paramètres concernés, plusieurs cycles d'essai sont nécessaires, dont chacun consiste à faire réaliser par le robot en mode autonome une courte distance de travail avec un jeu de réglage.

A l'issue de ce cycle ou de chacun de ces cycles consécutifs, l'opérateur valide ou non ces réglages en fonction de la qualité du travail effectué (inspection visuelle). L'inspection visuelle de la qualité du travail effectué peut être réalisée par l'opérateur en observant directement la parcelle ou indirectement via au moins une caméra présente sur le robot et/ou sur au moins un outil. Les images captées par cette caméra peuvent ensuite être analysées par l'opérateur sur un dispositif de contrôle portable. Cela débouche soit sur un nouveau cycle d'essais avec de nouveaux réglages en cas de qualité du travail insuffisante, soit sur la poursuite ou le redémarrage du travail de la parcelle si la qualité du travail est jugée satisfaisante. Durant cette troisième étape, effectuée en totalité en mode autonome, le robot réalise le travail agricole avec les derniers réglages validés et en suivant le parcours préétablis, ce de manière indépendante, ou le guidage depuis un système de contrôle à distance.

Dans les documents US 2017/355252 A1 et DE 10 2019 000794 A1, on décrit un procédé de réglage et/ou de calibrage d'une machine ou d'un attelage agricole mobile et motorisé(e), pourvu d'au moins un outil et apte à travailler une parcelle de manière autonome. Ce procédé consiste, en début de phase de travail d'une nouvelle parcelle, et suite à requête d'un opérateur ou validation d'une requête par un opérateur, à faire fonctionner temporairement ledit robot dans un mode similaire à un mode semi-autonome durant lequel ledit au moins un paramètre de fonctionnement dudit robot et/ou dudit au moins un outil est géré et ajusté par cet opérateur, en vue de son réglage ou calibrage pour la phase de travail autonome consécutive, et ce après validation par l'opérateur.

Dans ce contexte, la présente invention a pour but de proposer une solution permettant de régler et/ou de calibrer au moins un paramètre de fonctionnement d'au moins un robot agricole en accord avec les conditions réelles sur site, plus efficiente que les solutions actuelles et évitant l'utilisation du mode de travail autonome pour la phase de réglage et/ou de calibrage, et surtout son interruption, le cas échéant répétée, comme dans l'état de la technique précité.

A cet effet, l'invention a pour objet, un procédé de réglage et/ou de calibrage d'une machine ou d'un attelage agricole mobile et motorisé(e), dénommé ci-après robot agricole, pourvu d'au moins un outil et apte à travailler une parcelle de manière autonome, procédé caractérisé en ce qu'il consiste, en début de phase de travail d'une nouvelle parcelle, lors de la reprise d'une phase de travail interrompue sur une parcelle donnée déjà partiellement travaillée, en cas de modification substantielle des caractéristiques de la parcelle en cours de travail autonome et/ou en cas de dégradation notable de la qualité du travail réalisé par le robot agricole en cours de travail autonome, et suite à requête d'un opérateur ou validation d'une requête par un opérateur (5), à faire fonctionner temporairement ledit robot dans un mode semi-autonome durant lequel au moins un paramètre de fonctionnement dudit robot et/ou dudit au moins un outil est géré et ajusté par cet opérateur ou par le robot, ou par l'outil, ou par une combinaison des trois, en vue de son réglage ou calibrage pour la phase de travail autonome consécutive, ce après validation par l'opérateur.

L'invention concerne également un procédé de mise en œuvre d'un robot agricole pour le travail d'une parcelle, intégrant le procédé de réglage et/ou de calibrage précité.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

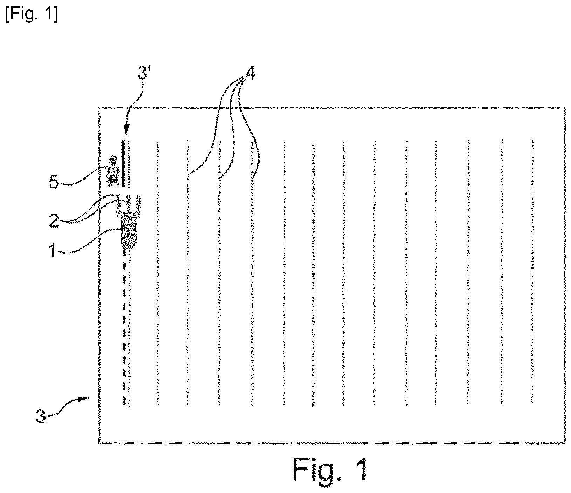

[Fig. 1] représente, en vue schématique de dessus, une parcelle sur laquelle un robot agricole travaille une partie de parcelle initiale en mode semi-automatique en relation avec un opérateur et durant une phase de réglage et/ou de calibrage d'au moins un paramètre de fonctionnement, en accord avec le procédé selon l'invention ;

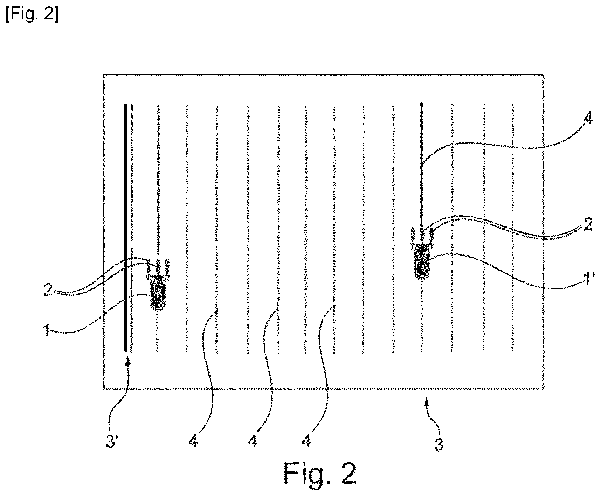

[Fig. 2] représente la parcelle de la figure 1, à un instant postérieur et travaillée par le robot agricole fonctionnant en mode autonome, avec les paramètres tels que réglés et calibrés à l'issue de la phase représentée sur la figure 1, un second robot similaire à celui de la figure 1 et partageant les mêmes réglages et calibrages de paramètres travaillant de manière autonome une autre partie de la même parcelle (côté droit) de la figure 2 ;

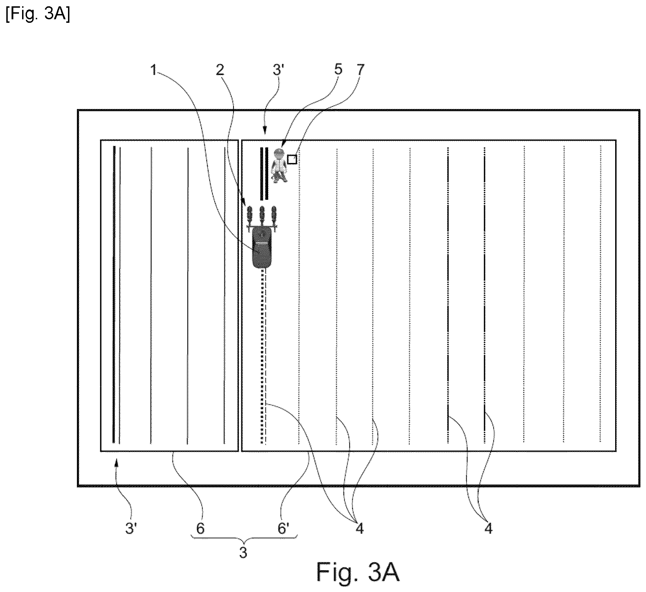

[Fig. 3A] et

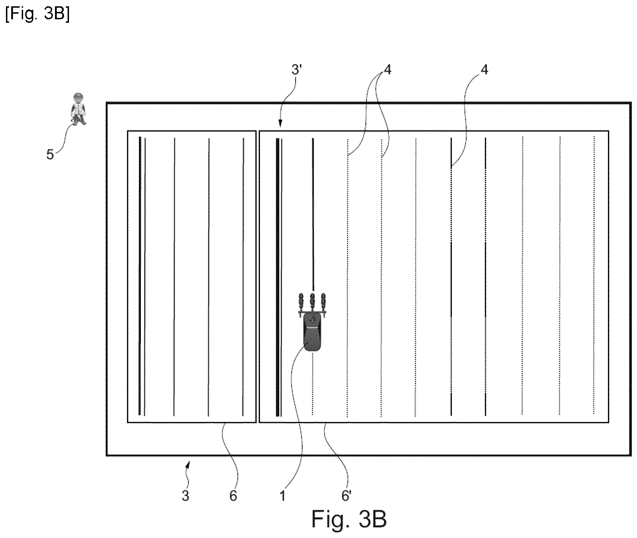

[Fig. 3B] représentent une parcelle divisée en deux zones présentant des caractéristiques différentes ou travaillées à des moments différents, la première petite zone ayant été travaillée avec des premiers réglages et calibrages des paramètres de fonctionnement, et la seconde grande zone étant travaillé de manière autonome par le robot agricole (figure 3B), après une nouvelle phase de fonctionnement en mode semi-autonome correspondant à une nouvelle phase de réglage et de calibrage (figure 3A), et,

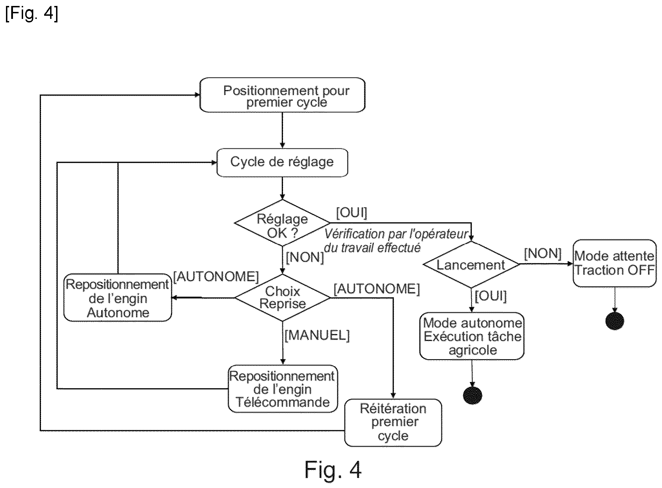

[Fig. 4] est un ordinogramme illustrant un mode de réalisation du procédé selon l'invention.

Sur les figures 1 à 3, le parcours encore à effectuer par le robot en mode de travail autonome est représenté en tracé pointillé simple et le parcours déjà effectué en mode de travail autonome est représenté en tracé continu (trait plein) simple. Sur ces mêmes figures, le parcours encore à effectuer par le robot en mode de travail semi-autonome (mode réglage et/ou calibrage) est représenté en tracé pointillé double et le parcours déjà effectué en mode de travail semi-autonome est représenté en tracé continu (traits pleins) double.

Les figures 1 à 4 illustrent schématiquement ou symboliquement un procédé de réglage et/ou de calibrage d'une machine ou d'un attelage agricole mobile et motorisé(e), dénommé ci-après robot agricole (1), pourvu d'au moins un outil (2) et apte à travailler une parcelle (3) de manière autonome.

Conformément à l'invention, ce procédé est caractérisé en ce qu'il consiste, en début de phase de travail d'une nouvelle parcelle, lors de la reprise d'une phase de travail interrompue sur une parcelle donnée déjà partiellement travaillée, en cas de modification substantielle des caractéristiques de la parcelle en cours de travail autonome et/ou en cas de dégradation notable de la qualité du travail réalisé par le robot agricole (1) en cours de travail autonome, et suite à requête d'un opérateur (5) ou validation d'une requête par un opérateur (5), à faire fonctionner temporairement ledit robot (1) dans un mode semi-autonome durant lequel au moins un paramètre de fonctionnement dudit robot (1) et/ou dudit au moins un outil (2) est géré et ajusté par cet opérateur (5), par le robot (1), par l'outil (2) ou par les trois combinés, en vue de son réglage ou calibrage pour la phase de travail autonome consécutive, ce après validation par l'opérateur (5).

Ainsi, l'invention fournit un mode de fonctionnement spécifique du robot agricole (1) durant lequel soit l'opérateur (5), soit le robot (1) lui-même, soit l'outil (2) lui-même, soit une combinaison des trois, peut régler et/ou calibrer sur site, en conditions actuelles, en direct, en temps réel et avec un contrôle de visu par l'opérateur, au moins un paramètre de fonctionnement (bien entendu apte à être régler ou calibrer), sans avoir à démarrer le mode de fonctionnement autonome (et donc sans avoir à l'interrompre).

Lorsque le ou les paramètre(s) de fonctionnement à régler/calibrer est (sont) géré(s) et ajusté(s) par l'opérateur, les autres paramètres de fonctionnement (non modifiés durant cette phase) sont gérés par le robot comme dans le mode de fonctionnement autonome. Dans l'autre variante de mise en œuvre du procédé, c'est-à-dire lorsque le robot gère et ajuste le(s) paramètre(s) de fonctionnement concerné(s), les autres paramètres de fonctionnement (non modifiés durant cette phase) sont avantageusement également gérés par le robot. Toutefois, dans les deux variantes, le réglage/calibrage doit être validé par l'opérateur avant de passer en mode de travail autonome.

Préférentiellement, la partie de parcelle (3') travaillée durant la phase de fonctionnement en mode semi-autonome n'est pas retravaillée durant ladite phase de travail autonome consécutive. Ainsi, en réalisant déjà le travail attendu sur la partie de parcelle (3') parcourue durant cette phase de fonctionnement semi-autonome spécifique, il en résulte une diminution d'autant de la surface à travailler ultérieurement en mode de travail autonome, d'où un gain en productivité.

Avantageusement, ledit au moins un paramètre de fonctionnement du robot agricole (1) et/ou dudit au moins un outil (2), qui est géré et ajusté par l'opérateur (5) ou par le robot (1), ou par l'outil (2), ou par une combinaison des trois, durant la phase de fonctionnement semi-autonome, est choisi dans le groupe formé par la puissance développée, la vitesse de déplacement, la direction de déplacement, la configuration du parcours de travail sur la parcelle (3), la configuration du robot (1) et le positionnement et/ou l'orientation et/ou la configuration et/ou les paramètres de fonctionnement dudit au moins un outil (2).

Les autres paramètres de fonctionnement sont contrôlés par le robot comme dans le mode autonome.

En fonction du type de robot et/ou de la nature de l'outil concerné, le procédé peut consister à régler et/ou à calibrer au moins deux paramètres de fonctionnement différents durant le mode de fonctionnement semi-autonome, soit en autorisant leur gestion et ajustement simultanés, soit en autorisant leur gestion et ajustement de manière individuelle et séparée durant au moins deux phases consécutives. Ainsi, à titre d'exemple, l'opérateur pourra régler simultanément ou successivement la configuration de l'outil (2) et la vitesse d'avance du robot (1).

Dans les cas les plus simples et de manière générale, la phase de fonctionnement en mode semi-autonome ne comporte qu'un seul cycle opérationnel. Durant cette phase, le robot (1) peut parcourir une fraction de rang, la totalité d'un rang ou plus qu'un rang du parcours (4) défini à l'avance pour la parcelle (3) considéré.

En variante toutefois et pour les situations plus complexes, la phase de fonctionnement en mode semi-autonome peut comprendre au moins deux cycles consécutifs, en ce que durant le deuxième cycle et/ou l'un au moins des éventuels cycles suivants, le(s) même(s) paramètre(s) de fonctionnement est(sont) calibré(s) et/ou réglé(s), chaque cycle étant suivi d'une phase de validation du travail effectué par le robot agricole (1).

Additionnellement ou selon une autre variante, il peut être prévu la phase de fonctionnement en mode semi-autonome comprenne au moins deux cycles consécutifs, en ce que durant le deuxième cycle et/ou l'un au moins des éventuels cycles suivants, au moins un second paramètre de fonctionnement, différent de celui concerné par le premier cycle, est calibré et/ou réglé, chaque cycle étant suivi d'une phase de validation du travail effectué par le robot agricole (1).

Avantageusement, il peut être prévu qu'un retour d'information sur les résultats du/des paramètre(s) de fonctionnement utilisé(s) durant un cycle de travail en mode semi-autonome soit utilisé dans la détermination du/des paramètre(s) de fonctionnement du/des cycle(s) suivant(s). Ce retour d'information peut être obtenu via au moins un capteur présent sur le robot (1) et/ou sur l'outil (2). Les résultats d'un cycle peuvent ainsi être pris en compte par l'opérateur afin d'affiner le choix du/des paramètre(s) de fonctionnement du/des cycle(s) suivant(s).

En fonction du type de travail à réaliser, il est possible ou non de repasser sur la même zone de la parcelle.

En accord avec une première variante de réalisation, par exemple envisageable avec une opération de travail du sol, il peut être prévu que durant chacun des différents cycles consécutifs de la phase de fonctionnement en mode semi-autonome, le robot agricole (1) se déplace sur la même partie de parcelle (3') et selon le même parcours (4) que lors du premier cycle, ledit robot (1) se repositionnant de manière autonome ou non (en début de parcours).

En accord avec une seconde variante de réalisation, par exemple adaptée pour une opération du type semis, il peut être prévu que durant chacun des différents cycles consécutifs de la phase de fonctionnement en mode semi-autonome, le robot agricole (1) se déplace sur des parties de parcelle (3') différentes consécutives, ledit robot (1) se positionnant de manière autonome ou non (en début de parcours de la partie suivante).

En vue de tirer profit de l'expérience acquise durant la phase de fonctionnement en mode semi-autonome au-delà de la fin du travail sur la parcelle considérée, par exemple pour l'année d'après, ou pour partager les fruits de cette expérience lors d'une opération agricole ultérieure, le procédé peut consister à sauvegarder le profil de réglage et/ou de calibrage du robot agricole (1) considéré à l'issue de sa phase de fonctionnement en mode semi-autonome, le cas échéant après une courte phase de validation en mode de travail autonome, en vue de sa réutilisation ultérieure dans des circonstances similaires et/ou de sa transmission à au moins un autre robot agricole (1') similaire faisant partie de la même flotte que le robot agricole (1) considéré, et éventuellement prévu pour travailler la même parcelle (3).

Afin de ne pas solliciter de manière superflue l'intervention de l'opérateur, il peut être envisagé, en particulier avant le démarrage de la phase de réglage/calibrage, de déterminer la longueur du parcours (4) à réaliser par le robot agricole (1) durant la phase de fonctionnement en mode semi-autonome, notamment en fonction du type d'outil(s) (2), des caractéristiques de la parcelle (3) et/ou de la nature de l'opération agricole à effectuer.

Bien entendu, au moins certains des réglages ou calibrages peuvent, en fonction du paramètre considéré, se faire par intervention manuelle. Toutefois, compte tenu du degré croissant de motorisation et d'automatisation des machines du type robot agricole (1), plusieurs, voire la plupart des paramètres réglables pourraient être gérés et ajustés par l'opérateur à distance. Dans ces conditions, il peut être fourni un moyen d'interface portable apte à communiquer avec le robot agricole (1) et autorisant le réglage et/ou le calibrage d'au moins un paramètre durant la phase de fonctionnement en mode semi-autonome, ledit moyen d'interface pouvant indiquer à l'opérateur les opérations à effectuer, les paramètres à régler et/ou à calibrer et l'occurrence d'une nouvelle phase de fonctionnement en mode semi-autonome. Un tel moyen (non représenté, mais porté par l'opérateur sur les figures 1 et 3A par exemple) peut avantageusement se présenter sous la forme d'une tablette (7) ou d'un smartphone et permet aussi, par le biais de séquences préprogrammées et d'une liste de vérification de s'assurer qu'un protocole prédéfini est respecté, tout en fournissant une meilleure ergonomie.

Le moyen d'interface permet à l'opérateur de suivre en continu le procédé de réglage et/ou de calibrage et notamment de recevoir le retour d'information d'un cycle avant de déterminer le(s) paramètre(s) de fonctionnement du cycle suivant. Dans ce cas-là, le moyen d'interface et le(s) capteur(s) présents sur le robot agricole (1) et/ou sur l'outil (2) sont en communication directe ou indirecte.

Le retour d'information peut comprendre un ou plusieurs types d'informations, tels que par exemple : des valeurs numériques, des images, ou des vidéos. Ces données peuvent représenter différentes informations comme une profondeur de travail, un niveau d'usure d'un outil de travail, un état du sol avant et/ou après le passage du robot (1), une représentation du sol, une caractéristique du sol, une quantité de résidus, une qualité du travail réalisé par le robot (1) et/ou l'outil (2), un respect d'une valeur seuil ou d'une consigne de travail,

Le moyen d'interface peut permettre d'afficher des informations servant à accompagner l'opérateur durant le procédé de réglage et/ou de calibrage. Ces informations peuvent indiquer à l'opérateur les différentes actions à effecteur avant, pendant, et/ou après les différentes phases de fonctionnement et cycles. Ces informations permettent de s'assurer que l'opérateur respecte un protocole de réglage et/ou de calibrage prédéfini mais aussi de faciliter l'utilisation du système global.

Pour faire face à des évènements non prévus ou encore s'adapter à des conditions changeantes, l'invention peut prévoir d'effectuer, pour une parcelle donnée (3) et un robot agricole (1) considéré, et après une phase de travail en mode autonome, au moins une seconde phase de fonctionnement en mode semi-autonome aboutissant à une modification du réglage et/ou du calibrage d'au moins un paramètre de fonctionnement, ce en fonction d'une carte de préconisation associée à la parcelle (3), suite à une interruption involontaire de la phase de travail en autonome ou encore suite au constat d'une dégradation de la qualité du travail réalisé par le robot (1). Parmi les imprévus possibles, on peut notamment citer : une interruption du fait d'intempéries (modification des conditions sur site, mais travail déjà partiellement effectué), une interruption du fait d'une panne ou d'une opération de maintenance ou encore une grande hétérogénéité de la parcelle travaillée (soucis de maintien d'une qualité de travail homogène).

Les profils de réglage résultants sont généralement associés à une configuration [parcelle-robot-outil] donnée.

Lorsque le procédé est mis en œuvre en relation avec un attelage agricole, comprenant le robot avec éventuellement au moins un outil et au moins une machine agricole supplémentaire attelé, le procédé peut consister à effectuer également, durant la phase de fonctionnement en mode semi-autonome du robot agricole (1) destinée au réglage ou calibrage d'au moins un de ses paramètres de fonctionnement et/ou de son outil (2), ou durant une phase de fonctionnement postérieure, le réglage et/ou le calibrage d'au moins un paramètre de fonctionnement d'une machine attelée audit robot (1) et/ou d'au moins un outil d'une telle machine.

L'invention concerne également un procédé de mise en œuvre d'au moins un robot agricole (1) pour le travail d'une parcelle (3), ledit robot (1) consistant en une machine ou un attelage agricole mobile et motorisée, pourvu d'au moins un outil (2) et apte à travailler une parcelle (3) de manière autonome, ledit procédé comprenant au moins une phase de mise en place dudit robot agricole (1) en début de parcours de travail sur une parcelle donnée (3), ce sous le contrôle d'un opérateur, au moins une phase de réglage et/ou de calibrage du robot (1), et le cas échéant de son outil (2), et au moins une phase de travail autonome.

Ce procédé est caractérisé en ce que l'exécution de la ou de chacune des phase(s) de réglage et/ou de calibrage dudit robot (1) et/ou de l'outil (2) est réalisée en mode de travail semi-autonome et consiste à mettre en œuvre le procédé décrit ci-dessus.

Selon une caractéristique de l'invention, il peut être prévu d'exploiter, pour le travail de la parcelle (3) et la réalisation du parcours du robot (1) sur cette dernière, une carte de préconisation préétablie, cette carte comprenant également la localisation d'au moins un éventuel segment de parcours correspondant à une nouvelle phase de réglage et/ou de calibrage en mode semi-autonome dudit robot (1), en cours de travail de la parcelle (3) et postérieurement à une phase initiale de réglage et/ou de calibrage.

Une telle seconde phase réglage et/ou de calibrage, illustrée sur les figures 3A et 3B, peut par exemple être recommandé ou nécessaire dans le cas d'une interruption volontaire ou non, une modification des conditions sur site (pluie), ou encore une évolution de la nature du sol ou des végétaux.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention, qui est défini dans les revendications annexées.

## Revendications

1. Procédé de réglage et/ou de calibrage d'une machine ou d'un attelage agricole mobile et motorisé(e), dénommé ci-après robot agricole (1), pourvu d'au moins un outil (2) et apte à travailler une parcelle (3) de manière autonome, ledit procédé consistant, en début de phase de travail d'une nouvelle parcelle, lors de la reprise d'une phase de travail interrompue sur une parcelle donnée déjà partiellement travaillée, en cas de modification substantielle des caractéristiques de la parcelle en cours de travail autonome et/ou en cas de dégradation notable de la qualité du travail réalisé par le robot agricole (1) en cours de travail autonome, et suite à requête d'un opérateur (5) ou validation d'une requête par un opérateur (5), d'une part, à faire fonctionner temporairement ledit robot (1) dans un mode semi-autonome durant lequel ledit au moins un paramètre de fonctionnement dudit robot (1) et/ou dudit au moins un outil (2) est géré et ajusté par cet opérateur (5) ou par le robot (1), ou par l'outil (2), ou par une combinaison des trois, en vue de son réglage ou calibrage pour la phase de travail autonome consécutive, ce après validation par l'opérateur (5), et,
d'autre part, à déterminer la longueur du parcours (4) à réaliser par le robot agricole (1) durant cette phase de fonctionnement en mode semi-autonome, notamment en fonction du type d'outil(s) (2), des caractéristiques de la parcelle (3) et/ou de la nature de l'opération agricole à effectuer.

2. Procédé selon la revendication 1, **caractérisé en ce que** la partie de parcelle (3') travaillée durant la phase de fonctionnement en mode semi-autonome n'étant pas retravaillée durant ladite phase de travail autonome consécutive.

3. Procédé selon la revendication 1 ou 2, **caractérisé en ce que** ledit au moins un paramètre de fonctionnement du robot agricole (1) et/ou dudit au moins un outil (2), qui est géré et ajusté par l'opérateur (5) ou par le robot(1), ou par l'outil (2), ou par une combinaison des trois, durant la phase de fonctionnement semi-autonome, est choisi dans le groupe formé par la puissance développée, la vitesse de déplacement, la direction de déplacement, la configuration du parcours de travail sur la parcelle (3), la configuration du robot (1) et le positionnement et/ou l'orientation et/ou la configuration et/ou les paramètres de fonctionnement dudit au moins un outil (2).

4. Procédé selon l'une quelconque des revendications 1 à 3, **caractérisé en ce qu'**il consiste à régler et/ou à calibrer au moins deux paramètres de fonctionnement différents durant le mode de fonctionnement semi-autonome, soit en autorisant leur gestion et ajustement simultanés, soit en autorisant leur gestion et ajustement de manière individuelle et séparée durant au moins deux phases consécutives.

5. Procédé selon l'une quelconque des revendications 1 à 4, **caractérisé en ce que** la phase de fonctionnement en mode semi-autonome comprend au moins deux cycles consécutifs, **en ce que** durant le deuxième cycle et/ou l'un au moins des éventuels cycles suivants, le(s) même(s) paramètre(s) de fonctionnement est(sont) calibré(s) et/ou réglé(s) et **en ce que** chaque cycle est suivi d'une phase de validation du travail effectué par le robot agricole (1).

6. Procédé selon l'une quelconque des revendications 1 à 4, **caractérisé en ce que** la phase de fonctionnement en mode semi-autonome comprend au moins deux cycles consécutifs, **en ce que** durant le deuxième cycle et/ou l'un au moins des éventuels cycles suivants, au moins un second paramètre de fonctionnement, différent de celui concerné par le premier cycle, est calibré et/ou réglé et **en ce que** chaque cycle est suivi d'une phase de validation du travail effectué par le robot agricole (1).

7. Procédé selon l'une quelconque des revendications 1 à 6, **caractérisé en ce qu'**il consiste à sauvegarder le profil de réglage et/ou de calibrage du robot agricole (1) considéré à l'issue de sa phase de fonctionnement en mode semi-autonome, le cas échéant après une courte phase de validation en mode de travail autonome, en vue de sa réutilisation ultérieure dans des circonstances similaires et/ou de sa transmission à au moins un autre robot agricole (1') similaire faisant partie de la même flotte que le robot agricole (1) considéré, et éventuellement prévu pour travailler la même parcelle (3).

8. Procédé selon l'une quelconque des revendications 1 à 7, **caractérisé en ce qu'**il consiste à fournir un moyen d'interface portable apte à communiquer avec le robot agricole (1) et autorisant le réglage et/ou le calibrage d'au moins un paramètre durant la phase de fonctionnement en mode semi-autonome, ledit moyen d'interface pouvant indiquer à l'opérateur les opérations à effectuer, les paramètres à régler et/ou à calibrer et l'occurrence d'une nouvelle phase de fonctionnement en mode semi-autonome.

9. Procédé selon l'une quelconque des revendications 1 à 8, **caractérisé en ce qu'**il consiste à effectuer, pour une parcelle donnée (3) et un robot agricole (1) considéré, et après une phase de travail en mode autonome, au moins une seconde phase de fonctionnement en mode semi-autonome aboutissant à une modification du réglage et/ou du calibrage d'au moins un paramètre de fonctionnement, ce en fonction d'une carte de préconisation associée à la parcelle (3), suite à une interruption involontaire de la phase de travail en autonome ou encore suite au constat d'une dégradation de la qualité du travail réalisé par le robot (1).

10. Procédé de mise en oeuvre d'au moins un robot agricole (1) pour le travail d'une parcelle (3), ledit robot (1) consistant en une machine ou un attelage agricole mobile et motorisée, pourvu d'au moins un outil (2) et apte à travailler une parcelle (3) de manière autonome, ledit procédé comprenant au moins une phase de mise en place dudit robot agricole (1) en début de parcours de travail sur une parcelle donnée (3), ce sous le contrôle d'un opérateur, au moins une phase de réglage et/ou de calibrage du robot (1), et le cas échéant de son outil (2), et au moins une phase de travail autonome, procédé **caractérisé en ce que** l'exécution de la ou de chacune des phase(s) de réglage et/ou de calibrage dudit robot (1) et/ou de l'outil (2) est réalisée en mode de travail semi-autonome et consiste à mettre en oeuvre le procédé selon l'une quelconque des revendications 1 à 9.

## Patentansprüche

1. Verfahren zur Einstellung und/oder Kalibrierung einer mobilen und motorisierten landwirtschaftlichen Maschine oder eines Gespanns, im Folgenden landwirtschaftlicher Roboter (1) genannt, der mit mindestens einem Werkzeug (2) ausgestattet ist und ein Grundstück (3) autonom bearbeiten kann, wobei das Verfahren besteht, am Anfang der Arbeitsphase eines neuen Grundstücks, bei der Wiederaufnahme einer unterbrochenen Arbeitsphase auf einer gegebenen, bereits bearbeiteten Grundstück, im Falle einer wesentlichen Änderung der Merkmale des Grundstücks im Verlauf der autonomen Arbeit und/oder im Falle einer wesentlichen Verschlechterung der Qualität der vom landwirtschaftlichen Roboter (1) im Verlauf der autonomen Arbeit durchgeführten Arbeit, und nach einer Anfrage eines Bedieners (5) oder der Bestätigung einer Anfrage durch einen Bediener (5), einerseits den Roboter (1) vorübergehend in einem halbautonomen Modus arbeiten zu lassen, während dessen mindestens ein Betriebsparameter des Roboters (1) und/oder des mindestens einen Werkzeugs (2) durch diesen Bediener (5) oder durch den Roboter (1) oder durch das Werkzeug (2) oder durch eine Kombination der drei gesteuert und eingestellt wird, um ihn für die nachfolgende autonome Arbeitsphase einzustellen oder zu kalibrieren, dies nach Validierung durch den Bediener (5), und andererseits die Länge der vom landwirtschaftlichen Roboter (1) während dieser Arbeitsphase im halbautonomen Modus zu absolvierenden Strecke (4) zu bestimmen, insbesondere in Abhängigkeit von der Art des/der Werkzeuge(s) (2), den Merkmalen des Grundstücks (3) und/oder der Art der durchzuführenden landwirtschaftlichen Arbeit.

2. Verfahren nach Anspruch 1, **dadurch gekennzeichnet, dass** der Teil des Grundstücks (3'), der während der Betriebsphase im halbautonomen Modus bearbeitet wird, in der anschließenden autonomen Arbeitsphase nicht erneut bearbeitet wird.

3. Verfahren nach Anspruch 1 oder 2, **dadurch gekennzeichnet, dass** der mindestens eine Betriebsparameter des landwirtschaftlichen Roboters (1) und/oder des mindestens einen Werkzeugs (2), der während der Phase des halbautonomen Betriebs vom Bediener (5) oder vom Roboter (1) oder vom Werkzeug (2) oder von einer Kombination der drei gesteuert und eingestellt wird, aus der Gruppe ausgewählt ist, die aus der entwickelten Leistung, der Fahrgeschwindigkeit, der Fahrrichtung, der Konfiguration des Arbeitswegs auf dem Grundstück (3), der Konfiguration des Roboters (1) und der Positionierung und/oder Ausrichtung und/oder der Konfiguration und/oder den Betriebsparametern des mindestens einen Werkzeugs (2) besteht.

4. Verfahren nach einem der Ansprüche 1 bis 3, **dadurch gekennzeichnet, dass** es darin besteht, mindestens zwei verschiedene Betriebsparameter während des halbautonomen Betriebsmodus einzustellen und/oder zu kalibrieren, indem entweder ihre gleichzeitige Steuerung und Einstellung zugelassen wird oder indem ihre individuelle und getrennte Steuerung und Einstellung während mindestens zwei aufeinanderfolgenden Phasen zugelassen wird.

5. Verfahren nach einem der Ansprüche 1 bis 4, **dadurch gekennzeichnet, dass** die Betriebsphase im halbautonomen Modus mindestens zwei aufeinanderfolgende Zyklen umfasst, dass während des zweiten Zyklus und/oder mindestens einem der möglichen folgenden Zyklen der/die gleiche(n) Betriebsparameter kalibriert und/oder eingestellt wird/werden und dass auf jeden Zyklus eine Phase der Validierung der vom landwirtschaftlichen Roboter (1) geleisteten Arbeit folgt.

6. Verfahren nach einem der Ansprüche 1 bis 4, **dadurch gekennzeichnet, dass** die Betriebsphase im halbautonomen Modus mindestens zwei aufeinander folgende Zyklen umfasst, dass während des zweiten Zyklus und/oder mindestens einem der möglichen folgenden Zyklen mindestens ein zweiter Betriebsparameter, der sich von dem durch den ersten Zyklus betroffenen unterscheidet, kalibriert und/oder eingestellt wird, und dass auf jeden Zyklus eine Phase der Validierung der vom landwirtschaftlichen Roboter (1) geleisteten Arbeit folgt.

7. Verfahren nach einem der Ansprüche 1 bis 6, **dadurch gekennzeichnet, dass** es darin besteht, das Einstellungs- und/oder Kalibrierungsprofil des betrachteten landwirtschaftlichen Roboters (1) am Ende seiner Betriebsphase im halbautonomen Modus zu speichern, gegebenenfalls nach einer kurzen Validierungsphase im autonomen Arbeitsmodus, im Hinblick auf seine spätere Wiederverwendung unter ähnlichen Umständen und/oder seine Übertragung auf mindestens einen anderen ähnlichen landwirtschaftlichen Roboter (1'), der zur gleichen Flotte wie der betrachtete landwirtschaftliche Roboter (1) gehört und gegebenenfalls zur Bearbeitung des gleichen Grundstücks (3) vorgesehen ist.

8. Verfahren nach einem der Ansprüche 1 bis 7, **dadurch gekennzeichnet, dass** es darin besteht, ein tragbares Schnittstellenmittel bereitzustellen, das mit dem landwirtschaftlichen Roboter (1) kommunizieren kann und die Einstellung und/oder Kalibrierung mindestens eines Parameters während der Betriebsphase im halbautonomen Modus zulässt, wobei das Schnittstellenmittel dem Bediener die auszuführenden Operationen, die einzustellenden und/oder zu kalibrierenden Parameter und das Auftreten einer neuen Betriebsphase im halbautonomen Modus anzeigen kann.

9. Verfahren nach einem der Ansprüche 1 bis 8, **dadurch gekennzeichnet, dass** es darin besteht, für ein gegebenes Grundstück (3) und einen betrachteten landwirtschaftlichen Roboter (1) und nach einer Arbeitsphase im autonomen Modus mindestens eine zweite Betriebsphase im halbautonomen Modus durchzuführen, die zu einer Änderung der Einstellung und/oder der Kalibrierung mindestens eines Betriebsparameters führt, in Abhängigkeit von einer mit dem Grundstück (3) verbundenen Applikationskarte, nach einer unbeabsichtigten Unterbrechung der autonomen Arbeitsphase oder auch nach der Feststellung einer Verschlechterung der Qualität der vom Roboter (1) geleisteten Arbeit.

10. Verfahren zum Einsatz mindestens eines landwirtschaftlichen Roboters (1) zur Bearbeitung eines Grundstücks (3), wobei der Roboter (1) aus einer mobilen und motorisierten landwirtschaftlichen Maschine oder einem Gespann besteht, das mit mindestens einem Werkzeug (2) versehen ist und ein Grundstück (3) autonom bearbeiten kann, wobei das Verfahren mindestens eine Phase des Einsetzens des landwirtschaftlichen Roboters (1) am Anfang eines Arbeitswegs auf einem gegebenen Grundstück (3) umfasst, dies unter der Aufsicht eines Bedieners, mindestens eine Phase der Einstellung und/oder Kalibrierung des Roboters (1) und gegebenenfalls seines Werkzeugs (2) und mindestens eine Phase der autonomen Arbeit umfasst, wobei das Verfahren **dadurch gekennzeichnet ist, dass** die Ausführung der oder jeder Phase(n) der Einstellung und/oder Kalibrierung des Roboters (1) und/oder des Werkzeugs (2) im halbautonomen Arbeitsmodus erfolgt und darin besteht, das Verfahren nach einem der Ansprüche 1 bis 9 durchzuführen.

## Claims

1. Method for setting and/or calibrating a mobile and motorized agricultural machine or combination, hereinafter referred to as an agricultural robot (1), provided with at least one tool (2) and able to work a plot (3) autonomously, **characterized in that** it consists, when starting a work phase on a new plot, when resuming an interrupted work phase on a given plot which has already been partially worked, in the event of a substantial modification of the plot characteristics during autonomous work and/or in the event of a significant deterioration in the quality of the work carried out by the agricultural robot (1) when working autonomously, and following a request by an operator (5) or validation of a request by an operator (5), method which consists, on one hand, in temporarily operating the said robot (1) in a semi-autonomous mode during which at least one operating parameter of the said robot (1) and/or of the said at least one tool (2) is managed and adjusted by this operator (5) or by the robot (1), or by the tool (2), or by a combination of the three, with a view to its setting or calibrating for the subsequent autonomous work phase, after validation by the operator (5), and, on the other hand, to determine the length of the route (4) to be covered by the agricultural robot (1) during this operating phase in semi-autonomous mode, in particular as a function of the type of tool(s) (2), the characteristics of the plot (3) and/or the nature of the agricultural operation to be carried out.

2. Method according to claim 1, **characterized in that** the part of the plot (3') worked during the operating phase in semi-autonomous mode is not reworked during said next autonomous work phase.

3. Method according to claim 1 or 2, **characterized in that** the said at least one operating parameter of the agricultural robot (1) and/or of the said at least one tool (2), which is managed and adjusted by the operator (5) or by the robot (1), or by the tool (2), or by a combination of the three, during the semi-autonomous operating phase, is selected from the group formed by the developed power, the speed of movement, the direction of movement, the configuration of the work route on the plot (3), the configuration of the robot (1) and the positioning and/or orientation and/or configuration and/or operating parameters of the said at least one tool (2).

4. Method according to any one of claims 1 to 3, **characterized in that** it consists in setting and/or calibrating at least two different operating parameters during the semi-autonomous operating mode, either by allowing them to be managed and adjusted simultaneously, or by allowing them to be managed and adjusted individually and separately during at least two consecutive phases.

5. Method according to any one of claims 1 to 4, **characterized in that** the operating phase in semi-autonomous mode comprises at least two consecutive cycles, **in that** during the second cycle and/or one at least of the possible subsequent cycles, the same operating parameter(s) is/are calibrated and/or set, and **in that** each cycle is followed by a phase of validation of the work carried out by the agricultural robot (1).

6. Method according to any one of claims 1 to 4, **characterized in that** the operating phase in semi-autonomous mode comprises at least two consecutive cycles, **in that** during the second cycle and/or one at least of the possible subsequent cycles, at least one second operating parameter, different from that concerned by the first cycle, is calibrated and/or set, and **in that** each cycle is followed by a phase of validation of the work carried out by the agricultural robot (1).

7. Method according to any one of claims 1 to 6, **characterized in that** it consists in saving the setting and/or calibration profile of the agricultural robot (1) considered at the end of its operating phase in semi-autonomous mode, where applicable after a short validation phase in autonomous work mode, for its subsequent reuse under similar circumstances and/or for its transmission to at least one other similar agricultural robot (1') which is part of the same fleet as the agricultural robot (1) considered, and possibly intended to work the same plot (3).

8. Method according to any one of claims 1 to 7, **characterized in that** it consists in providing a mobile interface means, that is able to communicate with the agricultural robot (1) and allowing the setting and/or calibration of at least one parameter during the operating phase in semi-autonomous mode, the said interface means being able to indicate to the operator the operations to be carried out, the parameters to be set and/or calibrated and the occurrence of a new operating phase in semi-autonomous mode.

9. Method according to any one of claims 1 to 8, **characterized in that** it consists in carrying out, for a given plot (3) and an agricultural robot (1) considered, and after a work phase in autonomous mode, at least one second operating phase in semi-autonomous mode resulting in a modification of the setting and/or calibration of at least one operating parameter, depending on a prescription map associated with the plot (3), following an unintentional interruption of the autonomous work phase or after observing a deterioration in the quality of the work carried out by the robot (1).

10. Method for putting in operation at least one agricultural robot (1) to work a plot (3), the said robot (1) consisting of a mobile and motorized agricultural machine or combination, provided with at least one tool (2) and able to work a plot (3) autonomously, the said method comprising at least one phase of positioning the said agricultural robot (1) at the start of a work route on a given plot (3), under the control of an operator, at least one phase of setting and/or calibrating the robot (1), and where applicable its tool (2), and at least one autonomous work phase, method **characterized in that** the execution of the or each phase of setting and/or calibrating the said robot (1) and/or tool (2) is carried out in semi-autonomous work mode and consists in implementing the method according to any one of claims 1 to 9.
